# EUROPEAN PATENT SPECIFICATION

(11) **EP 2 272 350 B1**
(45) Date of publication and mention of the grant of the patent: **20.02.2013**
(21) Application number: 10183866.2
(22) Date of filing: 30.03.2005
(51) Int. Cl.: A01N 47/36, A01N 43/56

(54) **Synergistically Acting Herbicidal Mixtures**
Synergistische herbizide Zusammensetzungen
Compositions herbicides synergiques

(30) Priority: 01.04.2004 US 558131 P
(43) Date of publication of application: 12.01.2011
(62) Divisional of application: 08160242.7
(73) Proprietor: BASF Agrochemical Products, B.V., 6835 EA Arnhem (NL)
(72) Inventor: Sievernich, Bernd, 67454, Hassloch (DE); Brix, Horst Dieter, 76829, Landau (DE); Malefyt, Tim, Stroudsburg, PA 18360 (US)
(74) Representative: Graef, Claudia

(56) References cited:
- EP-A- 0 303 383
- EP-A- 0 614 606
- WO-A-03/024226
- US-A- 5 523 276
- DATABASE CA [Online] CHEMICAL ABSTRACTS SERVICE, COLUMBUS, OHIO, US; OKAZOV, P. N. ET AL: "Composition for control of the second growth of weeds in young corn titus and primextra mixture", XP002494495, retrieved from STN Database accession no. 2003:322084 & RU 2 195 822 C2 (SEVERO-KAVKAZSKII NAUCHNO-ISSLEDOVATEL'SKII INSTITUT GORNOGO I PREDGOR) 10 January 2003 (2003-01-10)
- DATABASE CA [Online] CHEMICAL ABSTRACTS SERVICE, COLUMBUS, OHIO, US; BIAN, DONGYUAN ET AL: "Compound herbicide for maize field", XP002494496, retrieved from STN Database accession no. 2001:806895 & CN 1 296 748 A (HE'NAN ZHONGDIAN HERBICIDE CO., LTD., PEOP. REP. CHINA HE'NAN ZHONGDIA) 30 May 2001 (2001-05-30)
- DATABASE CA [Online] CHEMICAL ABSTRACTS SERVICE, COLUMBUS, OHIO, US; GUTTIERI, MARY J. ET AL: "Preemergence weed control in potatoes (Solanum tuberosum) with rimsulfuron mixtures", XP002494497, retrieved from STN Database accession no. 1997:799269 & WEED TECHNOLOGY , 11(4), 755-761 CODEN: WETEE9; ISSN: 0890-037X, 1997,
- DATABASE CA [Online] CHEMICAL ABSTRACTS SERVICE, COLUMBUS, OHIO, US; YOU, ZHENGUO ET AL: "Herbicide composition for one-time application in rice field", XP002494498, retrieved from STN Database accession no. 2001:764520 & CN 1 293 895 A (PEOP. REP. CHINA PEOP. REP. CHINA) 9 May 2001 (2001-05-09)
- DATABASE CA [Online] CHEMICAL ABSTRACTS SERVICE, COLUMBUS, OHIO, US; WILSON, DODI E. ET AL: "Potato (Solanum tuberosum) variety and weed response to sulfentrazone and flumioxazin", XP002494499, retrieved from STN Database accession no. 2002:780925 & WEED TECHNOLOGY , 16(3), 567-574 CODEN: WETEE9; ISSN: 0890-037X, 2002,
- DATABASE CA [Online] CHEMICAL ABSTRACTS SERVICE, COLUMBUS, OHIO, US; TONKS, DENNIS J. ET AL: "SAN 582 efficacy and tolerance in potato (Solanum tuberosum)", XP002494500, retrieved from STN Database accession no. 1999:336596 & WEED TECHNOLOGY , 13(1), 71-76 CODEN: WETEE9; ISSN: 0890-037X, 1999,

## Description

The present invention relates to a synergistic herbicidal mixture comprising
A) a compound selected from the group consisting of sulfonylureas, including their respective isomers a s well as their respective environmentally compatible salts or esters or amides or other derivatives;
   and
B) metazachlor
   and, if desired,
C) at least one herbicidal compound selected from the group consisting of clomazone, atrazin, dichlormid, benoxacor, LAB-145138, MG-191, MON-13900, cyometrinil, oxabetrinil, fluxofenim, flurazole, naphtalicacidanhydride, fenchlorim, fenchlorazol, mefenpyr, cloquintocet (including its hydrate(s)), 1-ethyl-4-hydroxy-3-(1*H*-tetrazol-5-yl)-1*H*-quinolin-2-one, 4-carboxymethyl-chroman-4-carboxylic acid, *N*-(2-methoxy-benzoyl)-4-(3-methyl-ureido)-benzenesulfonamide, (3-oxo-isothiochroman-4-ylidenemethoxy)-acetic acid methyl ester including their respective isomers as well as their respective environmentally compatible salts or esters or amides or other derivatives.

The invention furthermore relates to herbicidal compositions comprising a herbicidally active amount of a synergistic herbicidal mixture as defined above and at least one liquid and/or solid carrier and, if desired, at least one further additive.

Moreover, the invention relates to a method of controlling undesirable vegetation by using above defined synergistic herbicidal mixture.

In crop protection products, it is always desirable to increase the specific activity and/or selectivity of an active ingredient and the reliability of action.

However, the activity and/or the selectivity of herbicides depends on a large number of factors e.g. type of the herbicide, amount of the herbicide, formulation of the herbicide, the type of weed, the combination of crop and weed, climate, soil, etc.

In many cases herbicides have an effect against a broad spectrum of weeds, however do not fight a certain type of other weeds, which is also present in the crop cultures to be protected.

Sometimes these obstacles can be overcome by using just bigger amounts of herbicide, however this is economically disadvantageous and may also reduce the selectivity of the herbicide, in other words may lead to damage of the crop to be protected.

It is a general desire in the application of agrochemicals to reduce their amount on one side and to broaden their ability to fight different weeds - which grow in certain crop cultures - without damaging the crop cultures on the other side.

This desire may be satisfied by combination of different herbicides having a different activity profile versus undesired weeds.

However, because of the huge number of herbicide active ingredients known in the art and the many factors which influence the activity and selectivity of herbicides it is virtually impossible to create the appropriate mixture just by doing some mixture experiments.

Therefore it is always a challenge to find an appropriate herbicide or herbicide mixture which fights a certain group of weeds in a certain crop culture.

WO 00/08938 A1 (now EP 1 104 241 B1, Bayer CropScience) describes the use of herbicide combinations for fighting weeds in herbicide resistant oilseed rape. Certain herbicidal compositions as such are also described. Respective herbicides are to be selected from four different groups and are to be combined with herbicides to be selected from five other groups. The gist of WO 00/08938 A1 is the combination of glyphosate or glufosinate with other co herbicides.

EP-A-0 303 383 discloses synergistic herbicidal compositions comprising nicosulfuron and a chloroacetamide compound selected from alachlor, metolachlor, propachlor and acetochlor.

US-A-5 523 276 discloses synergistic herbicidal compositions comprising cyclosulfamuron and a chloroacetamide compound selected from alachlor, metolachlor, butalachlor and pretitachlor.

EP-A-0 614 606 discloses a synergistic tertiary herbicidal composition comprising dimethamid, and a sulfonylurea herbicide.

WO 03/024226 discloses synergistic herbicidal compositions comprising S-metolachlor and foramsulfuron or tritosulfuron.

The herbicide combinations of the instant application as well as their use as described in the instant application are not disclosed in the aforementioned prior art.

It is an object of the present invention to increase the activity and/or selectivity of herbicides against undesirable harmful plants, in particular in certain crops (e.g. oilseed rape, canola (brassica napus)), without damaging these crops.

We have found that this object is achieved by the mixtures defined at the outset. We have furthermore found herbicidal compositions which comprise these mixtures, and methods of controlling undesirable vegetation.

The mixtures according to the invention show a synergistic effect; the compatibility of the herbicidally active compounds of components A), B) and, if desired C) for certain crop plants is generally retained.

The compounds which are embraced by component A) are the following.

Sulfonylureas are known from C.D.S. Tomlin, "The Pesticide Manual", 13th Edition, BCPC (2003), Index 5, 1337-1344 and http://www.hclrss.demon.co.uk/index_cn_frame.htm)

Examples of suitable Sulfonylureas are nicosulfuron, tritosulfuron, mesosulfuron, cyclosulfamuron, rimsulfuron, foramsulfuron.

The term "Sulfonylureas" shall mean herein the compounds as mentioned above, as well as their a) salts, e.g. salts of alkaline or earth alkaline metals or ammonium or organoammonium salts, for instance, sodium, potassium, ammonium, isopropyl ammonium etc.; b) respective isomers, e.g. stereo isomers such as the respective enantiomers, c) respective esters, e.g. C1-C8-(branched or non-branched) alkyl esters, such as methylesters, ethylesters, iso propyl esters, d) respective amides, e.g. amides or C1-C8-(branched or non-branched) mono or di alkyl amides, such as dimethylamides, diethylamides, di isopropyl amides.

Very suitable Sulfonylureas are cross spectrum sulfonylureas for example nicosulfuron, mesosulfuron, rimsulfuron or foramsulfuron.

Component B) is metazachlor.

Metazachlor herein shall mean 2-Chloro-(2',6'-dimethyl-N-pyrazol-1-yl-methyl)-acetamid in all of his crystal modifications, in particular the monoclinic Metazachlor which is described in EP 0 411 408 A (BASF Aktiengesellschaft).

For clarity sake the term Metazachlor shall include herein the compounds as mentioned above as well as their salts, e.g. salts of alkaline or earth alkaline metals or ammonium or organoammonium salts, for instance, sodium, potassium, magnesium, ammonium, isopropyl ammonium etc.

Component B) comprises in particular monoclinic Metazachlor.

Further components C) may be selected from the group consisting of clomazone, atrazine (see C.D.S. Tomlin, "The Pesticide Manual", 13th Edition, BCPC (2003), Index 5, 1337-1344 and http://www.hclrss.demon.co.uk/index_cn_frame.html) and the following compounds which usually function as "safeners", dichlormid, benoxacor, LAB-145138, MG-191, MON-13900, cyometrinil, oxabetrinil, fluxofenim, flurazole, naphtalicacidanhydride, fenchlorim, fenchlorazol, cloquintocet (including its esters and hydrate(s)), as described in "Herbizide [Herbicides]", Hock, Fedtke, Schmidt, 1st edition, Thieme 1995 (s. "Dichlormid" p.263, "Benoxacor" p.263, "LAB-145138" p.263, "MG-191" p.263, "MON-13900" p.263, "Cyometrinil" p.265, "Oxabetrinil" p.265, "Fluxofenim" p.265, "Flurazole" p.265, "Naphtalicacidanhydride" p.265, "Fenchlorim" p.266, "Fenchlorazol" p.266 isoxadifen, "Cloquintocet" p.266], or C.D.S. Tomlin, "The Pesticide Manual", 13th Edition, BCPC (2003), Index 5, 1337-1344 and http://www.hclrss.demon.co.uk/index_cn_frame.html_e.g. mefenpyr-diethyl, isoxadifen, 1-ethyl-4-hydroxy-3-(1*H*-tetrazol-5-yl)-1*H*-quinolin-2-one, 4-carboxymethyl-chroman-4-carboxylic acid, *N*-(2-methoxy-benzoyl)-4-(3-methyl-ureido)-benzenesulfonamide, (3-oxo-isothiochroman-4-ylidenemethoxy)-acetic acid methyl ester, all of these including their respective isomers as well as their respective environmentally compatible salts or esters or amides or other derivatives.

Preferred other components C) are clomazone, atrazin and the safeners cloquintocet (including its esters and hydrate(s)).

The present invention also extends to herbicidal compositions which comprise a herbicidally active amount of a synergistic herbicidal mixture (comprising components A), B) and, if desired, C) as described above), at least one liquid and/or solid carrier and, if desired, at least one further additive, for example a surfactant, adjuvant or others.

The herbicidal compositions and synergistic herbicidal mixtures according to the invention can effect very good control of broad-leaved weeds and grass weeds in many crops for example maize, cereals (for example wheat), brassica napus (canola, oilseed rape), sunflower, legumes, sugar cane, and soya without damaging the crop plants, an effect observed especially even at low rates of application.

Taking into consideration the variety of application method in question, the herbicidal compositions and synergistic herbicidal mixtures according to the invention can additionally be employed in a further number of crop plants for eliminating undesirable plants.

The herbicidal compositions and synergistic herbicidal mixtures according to the invention can preferably be used in crops which tolerate and/or are resistant to the action of ALS herbicides, preferably those ALS herbicides according to the invention. The resistance and or tolerance to said herbicides may be achieved by conventional breeding and/or by genetic engineering methods.

Crops which are tolerant to herbicides (e.g. tolerant to imidazolinone herbicides) are known for example from EP 0 154 204 A (MGI Pharma Inc.). Such crops are for example marketed by BASF under the trade name CLEARFIELD. Examples for such crops are maize, brassica napus (canola, oilseed rape), sunflower, rice, lentils and wheat.

Most preferable herbicide tolerant or herbicide resistant crops according to the invention is oilseed rape, canola (brassica napus).

The herbicidal mixtures or compositions according to the invention, are very suitable for fighting or controlling a broad spectrum of grasses and broadleaf weeds which are accompanying in general the abovementioned crops, e.g. in particular brassica napus (oil seed rape, canola).

Very preferably the weeds in ALS-herbicide resistant or tolerant brassica napus (oilseed rape, canola) are fighted by the herbicidal mixtures or compositions according to the invention. Those weeds include but are not limited to the following plant species: Alopecurus myosuroides; Apera spica-venti; Avena spec.; Brassica spec.; Capsella bursa-pastoris; Galium aparine; Lamium spec.; Raphanus spec.; Sinapis spec.; Sisymbrium officinale; Stellaria media; Thlaspi arvense.
Veronica spec.

The mixtures according to the invention, or the herbicidal compositions comprising them, can be employed, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, spreading or pouring.

The use forms depend on the intended purposes; in any case, they should guarantee the finest possible distribution of the active ingredients according to the invention.

Suitable inert additives (auxiliaries) are mineral oil fractions of medium to high boiling point such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, such as N-methylpyrrolidone and water.

Aqueous use forms can be prepared from emulsion concentrates, suspensions, pastes, wettable powders or water-dispersible granules by adding water. To prepare emulsions, pastes or oil dispersions, the substances, as such or dissolved in an oil or solvent, can be homogenized in water by means of wetting agent, tackifier, dispersant or emulsifier. However, it is also possible to prepare concentrates composed of active substance, wetting agent, tackifier, dispersant or emulsifier and, if appropriate, solvent or oil, and these concentrates are suitable for dilution with water.

Suitable surfactants are the alkali metal, alkaline earth metal and ammonium salts of aromatic sulfonic acids, e.g. ligno-, phenol-, naphthalene- and dibutylnaphthalenesulfonic acid, and of fatty acids, of alkyl- and alkylaryl sulfonates, of alkyl sulfates, lauryl ether sulfates and fatty alcohol sulfates, and salts of sulfated hexa-, hepta- and octadecanols, and of fatty alcohol glycol ether, condensates of sulfonated naphthalene and its derivatives with formaldehyde, condensates of naphthalene, or of the naphthalenesulfonic acids, with phenol and formaldehyde, polyoxyethylene octylphenyl ether, ethoxylated isooctyl-, octyl- or nonylphenol, alkylphenyl and tributylphenyl polyglycol ether, alkylaryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors or methylcellulose.

Powders, materials for spreading and dusts can be prepared by mixing or concomitantly grinding the synergistic herbicidal mixture or the individual active ingredients with a solid carrier.

Granules, e.g. coated granules, impregnated granules and homogeneous granules, can be prepared by binding the active ingredients to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic material, fertilizers such as ammonium sulfate, ammonium phosphate, ammonium nitrate, ureas and products of vegetable origin such as cereal meal, tree bark meal, wood meal and nutshell meal, cellulose powders or other solid carriers.

The concentrations of the mixtures according to the invention in the ready-to-use products can be varied within wide ranges. In general, the formulations comprise from 0.01 to 95% by weight, preferably 0.5 to 90% by weight, of the mixture according to the invention.

The components A) and B) and, if desired, C) can be formulated jointly, but also separately, and/or applied to the plants, their environment and/or seeds jointly or separately. It is preferable to apply the active ingredients simultaneously. However, it is also possible to apply them separately.

Moreover, it may be advantageous to apply the herbicidal compositions and synergistic herbicidal mixtures according to the invention, jointly or separately, with additional other crop protection agents, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates can also be added.

The mixtures according to the invention and the herbicidal compositions can be applied pre- or post-emergence. It is advantageous to apply the mixtures according to the invention post emergent when the crop has in general 1 to 6 leaves.

If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by).

In the case of a post-emergence treatment of the plants, the herbicidal mixtures or compositions according to the invention are preferably applied by foliar application. Application may be effected, for example, by usual spraying techniques with water as the carrier, using amounts of spray mixture of approx.15 to 1000 l/ha. The mixtures or compositions may also be applied by the so-called "low-volume" and "ultra-low-volume" methods, or in the form of so-called granules.

As a rule, the synergistic herbicidal mixtures comprise components A), B) and, if desired, C) in such weight ratios that the synergistic effect takes place.

The ratios of component A) and B) in the mixture in general range from 1:0.001 to 1:500, preferably from 1:0.01 to 1:100, particularly preferably from 1:0.1 to 1:50.

The ratios of components A) and C) in the mixture in general range from 1:0.002 to 1:800, preferably from 1:0.003 to 1:160, particularly preferably from 1:0.02 to 1:160.

The rate of application of pure synergistic herbicidal mixture, i.e. without formulation auxiliaries, amounts in general to 0.1 to 5000 g/ha, preferably 1 to 3000 g/ha, in particular 5 to 2500 g/ha, of active substance (a.s.), depending on the intended aim, the season, the target plants and growth stage.

The cumulated rate (sum of the amounts of all active ingredients of the respective group A)) of application of the component(s) A) is usually 5 to 75 g/ha of active substance (a.s.).

The rate of application of the Sulfonylureas is usually 0.1 to 200 g/ha, as a rule 1 to 100 g/ha, preferably 2 to 100 g/ha, of active substance (a.s.).

The rate of application of component B) is usually 0.1 to 5000 g/ha, as a rule 1 to 4000 g/ha, preferably 5 to 3000 g/ha, of active substance (a.s.).

In particular the rate of application of Metazachlor is usually 50 to 5000 g/ha, as a rule 75 to 3000 g/ha, preferably 100 to 2000 g/ha, of active substance (a.s.).

The preferred application rates of the active ingredients of the optional component C) are compiled in the following table.

| Active ingredient C | Rate of application (g/ha) |
|---|---|
| Dichlormid | 100-600 |
| Benoxacor | 10-200 |
| LAB 145138 | 50-500 |
| MG-191 | 200-1000 |
| MON-13900 (Furilazole) | 10-300 |
| Naphtalicacidanhydride | 300-1000 |
| Fenchlorim | 20-500 |
| Fenchlorazol | 5-100 |
| Mefenpyr-diethyl | 5-100 |
| Isoxadifen-ethyl | 1-100 |
| Cloquintocet-mexyl | 1-50 |
| AD 67 | 50-500 |
| R 29148 | 50-500 |

The herbicidal compositions and synergistic herbicidal mixtures according to the invention are very useful to control a broad spectrum of grass and broadleaf weeds. This usually leads to cleaner fields and higher purity of the harvested commodity as well as to higher yields of the respective crop, in particular brassica napus (oilseed rape, canola).

In particular brassica napus (oilseed rape, canola) seeds coming from fields treated with the herbicidal compositions and synergistic herbicidal mixtures according to the invention usually have higher seed purity. Based on current knowledge this may be due to the removal of unwanted brassica species.

A further advantage of the instant invention is the general reduction of tillage in the respective fields which - based on current knowledge - usually leads to less loss of soil by e.g. wind.

## Claims

1. A synergistic herbicidal mixture comprising
A) a compound selected from the group consisting of sulfonylureas, including their respective isomers a s well as their respective environmentally compatible salts or esters or amides or other derivatives;
and
B) metazachlor;
and, if desired,
C) at least one herbicidal compound selected from the group consisting of clomazone, atrazin, dichlormid, benoxacor, LAB-145138, MG-191, MON-13900, cyometrinil, oxabetrinil, fluxofenim, flurazole, naphtalicacidanhydride, fenchlorim, fenchlorazol, mefenpyr, cloquintocet (including its hydrate(s)), 1-ethyl-4-hydroxy-3-(1*H*-tetrazol-5-yl)-1*H*-quinolin-2-one, 4-carboxymethyl-chroman-4-carboxylic acid, *N*-(2-methoxybenzoyl)-4-(3-methyl-ureido)-benzenesulfonamide, (3-oxo-isothiochroman-4-ylidenemethoxy)-acetic acid methyl ester including their respective isomers as well as their respective environmentally compatible salts or esters or amides or other derivatives.

2. A synergistic herbicidal mixture as claimed in claim 1 in which the sulfonyl urea is selected from the group consisting of nicosulfuron, tritosulfuron, mesosulfuron, cyclosulfamuron, rimsulfuron, foramsulfuron including their respective isomers as well as their respective environmentally compatible salts or esters or amides or other derivatives.

3. A herbicidal composition comprising a herbicidally active amount of a synergistic herbicidal mixture as claimed in any of claims 1 or 2, at least one inert liquid and/or solid carrier and, if desired, at least one further additive.

4. A method of controlling undesired vegetation, which comprises applying a synergistic herbicidal mixture as claimed in any of claims 1 or 2 before, during and/or after the emergence of undesired plants simultaneously or in succession.

5. A method as claimed in claim 4, wherein the crops are tolerant or resistant against the synergistic herbicidal mixture.

## Patentansprüche

1. Synergistische herbizide Mischung, die Folgendes umfasst:
A) eine Verbindung ausgewählt aus der Gruppe bestehend aus Sulfonylharnstoffen, deren jeweiligen Isomeren sowie deren jeweiligen umweltverträglichen Salzen oder Estern oder Amiden oder anderen Derivaten;
und
B) Metazachlor;
sowie gegebenenfalls
C) mindestens eine herbizide Verbindung ausgewählt aus der Gruppe bestehend aus Clomazon, Atrazin, Dichlormid, Benoxacor, LAB-145138, MG-191, MON-13900, Cyometrinil, Oxabetrinil, Fluxofenim, Flurazol, Naphthalinsäureanhydrid, Fenchlorim, Fenchlorazol, Mefenpyr, Cloquintocet (einschließlich seines Hydrats bzw. seiner Hydrate), 1-Ethyl-4-hydroxy-3-(1*H*-tetrazol-5-yl)-1*H*-chinolin-2-on, 4-Carboxymethylchroman-4-carbonsäure, *N*-(2-Methoxybenzoyl)-4-(3-methylureido)benzolsulfonamid, (3-Oxoisothiochroman-4-ylidenmethoxy)essigsäure-methylester einschließlich ihrer jeweiligen Isomere sowie ihre jeweiligen umweltverträglichen Salze oder Ester oder Amide oder anderen Derivate.

2. Synergistische herbizide Mischung nach Anspruch 1, wobei der Sulfonylharnstoff ausgewählt ist aus der Gruppe bestehend aus Nicosulfuron, Tritosulfuron, Mesosulfuron, Cyclosulfamuron, Rimsulfuron, Foramsulfuron, einschließlich ihrer jeweiligen Isomere sowie ihrer entsprechenden umweltverträglichen Salze oder Ester oder Amide oder anderen Derivate.

3. Herbizide Zusammensetzung, die eine herbizid wirksame Menge einer wie oben definierten synergistischen herbiziden Mischung nach Anspruch 1 oder 2 umfasst, und mindestens einen flüssigen und/oder festen Träger sowie gegebenenfalls einen weiteren Zusatzstoff.

4. Verfahren zur Bekämpfung von unerwünschtem Pflanzenwuchs, bei dem man eine synergistische herbizide Mischung nach Anspruch 1 oder 2 vor, während und/oder nach dem Auflaufen der unerwünschten Pflanzen gleichzeitig oder nacheinander ausbringt.

5. Verfahren nach Anspruch 4, wobei Kulturen gegenüber der synergistischen herbiziden Mischung tolerant oder gegen diese resistent sind.

## Revendications

1. Mélange herbicide synergique comprenant
A) un composé choisi dans le groupe constitué de sulfonylurées, y compris leurs isomères respectifs, ainsi que leurs sels ou esters ou amides ou autres dérivés respectifs, compatibles avec l'environnement ;
et
B) du métazachlor ;
et, si on le désire,
C) au moins un composé herbicide choisi dans le groupe constitué par la clomazone, l'atrazine, le dichlormide, le bénoxacor, LAB-145138, MG-191, MON-13900, le cyométrinil, l'oxabétrinil, le fluxofénim, le flurazole, l'anhydride naphtalique, le fenchlorim, le fenchlorazole, le méfenpyr, le cloquintocet (y compris son/ses hydrate(s)), la 1-éthyl-4-hydroxy-3-(1*H*-tétrazol-5-yl)-1*H-*quinolin-2-one, l'acide 4-carboxyméthyl-chromane-4-carboxylique, le *N*-(2-méthoxybenzoyl)-4-(3-méthyl-uréido)-benzènesulfonamide, le (3-oxo-isothiochroman-4-ylidèneméthoxy)-acétate de méthyle y compris leurs isomères respectifs ainsi que leurs sels ou esters ou amides ou autres dérivés respectifs, compatibles avec l'environnement.

2. Mélange herbicide synergique selon la revendication 1 dans lequel la sulfonylurée est choisie dans le groupe constitué de nicosulfuron, de tritosulfuron, de mésosulfuron, de cyclosulfamuron, de rimsulfuron, de foramsulfuron, y compris leurs isomères respectifs ainsi que leurs sels ou esters ou amides ou autres dérivés respectifs, compatibles avec l'environnement.

3. Composition herbicide comprenant une quantité à action herbicide d'un mélange herbicide synergique selon l'une quelconque des revendications 1 ou 2, au moins une substance de support liquide et/ou solide inerte et, si on le désire, au moins un autre additif.

4. Procédé de lutte contre la végétation indésirable, qui comprend l'application, simultanément ou successivement, d'un mélange herbicide synergique selon l'une quelconque des revendications 1 ou 2, avant, pendant et/ou après la levée des plantes indésirables.

5. Procédé selon la revendication 4, dans lequel les cultures sont tolérantes ou résistantes au mélange herbicide synergique.
